# EUROPÄISCHE PATENTANMELDUNG

(11) **EP 2 388 536 A2**
(43) Veröffentlichungstag der Anmeldung: **23.11.2011**
(21) Anmeldenummer: 11163149.5
(22) Anmeldetag: 20.04.2011
(51) Int. Cl.: F24J 2/52

(54) **Montagefuss für Solarmodule sowie Montagesystem mit mehreren solcher Montagefüsse**

(30) Priorität: 17.05.2010 DE 102010029004
(71) Anmelder: HILTI Aktiengesellschaft, 9494 Schaan (LI)
(72) Erfinder: Wiedner, Christoph, 6800, Feldkirch (AT); Bragagna, Elio, 6822, Duens (AT)

(57) **Zusammenfassung**

Die Erfindung betrifft einen Montagefuß (10, 10") für Solarmodule, mit einem Grundkörper (12), der wenigstens eine Standfläche (22) hat, mit welcher sich der Montagefuß (10, 10") an einem Untergrund (24) abstützen kann, einem vom Grundkörper (12) nach oben ragenden Schenkel (32) und einem oberen Auflager (14) für eine erste schräggestellte Modulplatte (16), welches am Schenkel (32), vorzugsweise an dessen freiem Ende, angeordnet ist, wobei der Schenkel (32) eine Aufnahme (62) für ein Windschott (44) bildet.

Des Weiteren umfasst die Erfindung auch ein Montagesystem mit mehreren solcher Montagefüße (10, 10").

## Beschreibung

Die Erfindung betrifft einen Montagefuß für Solarmodule sowie ein Montagesystem, insbesondere ein Flachdach-Montagesystem für Solarmodule, mit solchen Montagefüßen.

Solaranlagen erfreuen sich derzeit angesichts steigender Energiekosten, zahlreicher Förderprogramme für regenerative Energien und aktueller Diskussionen über die Folgen eines globalen Klimawandels sowohl aus ökonomischen als auch ökologischen Gründen wachsender Beliebtheit. Eigentümer von für Solaranlagen geeigneten Immobilien sind dabei stets bestrebt, den maximalen Energieertrag bei möglichst geringen Investitionen in die Solarmodule und einen "solargerechten" Umbau des Gebäudes zu erzielen.

Es hat sich gezeigt, dass Flachdächer für eine Nutzung durch Solaranlagen besonders geeignet sind, da in der Regel keine oder lediglich minimale bauliche Anpassungen am Gebäude selbst notwendig sind. Üblicherweise wird als Unterkonstruktion lediglich ein Montagesystem aufgebaut, um die Solarmodule schräg zu stellen und nach Süden hin auszurichten, wodurch der Wirkungsgrad und damit die Energieausbeute der Solaranlage deutlich ansteigen.

Um Schäden an der Dachhaut und der bei Flachdächern empfindlichen Dachabdichtung zu vermeiden, wird dieses Montagesystem üblicherweise installiert, ohne eine direkte Befestigung oder Verbindung zum Gebäude herzustellen. Die Sicherung des Montagesystems gegen Verschieben oder Abheben erfolgt über Ballast, wobei jedoch die maximale Traglast des Flachdachs zu beachten ist. Das als Unterkonstruktion dienende Montagesystem bildet somit einen Dachaufsatz, an dem die Solarmodule unter einem gewünschten Neigungswinkel befestigt werden.

Da die Traglast der Dächer limitiert ist, sind im Stand der Technik bereits Maßnahmen zur Ballastreduktion beschrieben, welche auf unterschiedliche Art und Weise schon in heute üblichen Montagesystemen umgesetzt sind.

Aus dem Stand der Technik bekannte Maßnahmen sind z.B. Verbindungselemente, welche einzelne Solarmodule oder Solarmodulreihen der Solaranlage zu einer großen Einheit verbinden, um bei auftretender Windlast unerwünschte Verschiebungen der Solarmodule zu verhindern. Ferner ist es durchaus üblich, Windabweiser einzusetzen, um auf die Solarmodule wirkende Abhebekräfte zu reduzieren.

Die Windabweiser sind zumeist auf die Unterkonstruktion aufgeschraubte, ebene Platten, in der Regel dünne Metallplatten. Um bei Windlast ein Beulen der Platten zu verhindern und die beachtlichen Abhebekräfte aufnehmen zu können, sind zahlreiche auf Zug beanspruchbare Schrauben zur Verankerung der Windabweiser nötig. Dementsprechend ist die Montage der Windabweiser sehr zeitaufwendig und damit teuer.

Aufgabe der Erfindung ist es, einen möglichst einfachen und preiswert herstellbaren Montagefuß sowie ein Montagesystem für Solarmodule zu schaffen, welches eine einfache Installation von Windabweisern (Windschotts) ermöglicht.

Erfindungsgemäß wird diese Aufgabe gelöst durch einen Montagefuß für Solarmodule, mit einem Grundkörper, der wenigstens eine Standfläche hat, mit welcher sich der Montagefuß an einem Untergrund abstützen kann, einem vom Grundkörper nach oben ragenden Schenkel und einem oberen Auflager für eine erste schräggestellte Modulplatte, welches vorzugsweise am freien Ende des Schenkels angeordnet ist, wobei der Schenkel eine Aufnahme für ein Windschott bildet.

Diese unmittelbar am Schenkel des Montagefußes angeformte Aufnahme erlaubt eine deutlich vereinfachte Installation des Windschotts, bei der sich die Anzahl zusätzlicher Befestigungsmittel erheblich reduzieren lässt oder sogar ganz auf zusätzliche Befestigungsmittel wie Schrauben oder Niete verzichtet werden kann.

Der Montagefuß weist bevorzugt ein mit dem Grundkörper verbundenes, unteres Auflager für eine zur ersten Modulplatte nicht-koplanare, benachbarte, zweite schräggestellte Modulplatte auf. Die Aufnahme für das Ballastelement, insbesondere der gesamte Schenkel mit der Aufnahme, erstreckt sich vorzugsweise vom unteren Auflager weg schräg nach oben, wodurch sich ein gewünschter Abstand zwischen zwei benachbarten Solarmodulreihen einstellen lässt.

In einer Ausführungsform ist die Aufnahme eine am Schenkel des Montagefußes angeformte Führungsnut zur Aufnahme eines seitlichen Rands des Windschotts. In diesem Fall erfolgt die Installation des Windschotts durch einfaches Einschieben in die Führungsnut. Auf das Windschott wirkende Abhebekräfte können somit generell oder zumindest im seitlichen Randbereich durch die Führungsnut aufgenommen werden, sodass weniger, insbesondere gar keine zusätzlichen Befestigungsmittel notwendig sind.

Die Führungsnut kann dabei in Nutlängsrichtung gekrümmt sein. Durch eine leichte, vorzugsweise bogenförmige Krümmung der Führungsnut ist eine Montage des Windschotts unter geringer Vorspannung möglich, wodurch eine störende Geräuschenfiniicklung durch in der Führungsnut klappernde Windschotts unterbunden wird. Ohne die vorgesehene Krümmung der Längsnut müssten die Anforderungen an eine Passgenauigkeit zwischen Windschott und Längsnut deutlich erhöht werden, um eine klapperfreie Windschottbefestigung zu gewährleisten. Dies würde jedoch zu einem erhöhten Aufwand und damit zu Mehrkosten bei der Fertigung des Montagesystems führen. Zusätzlich oder alternativ hierzu kann natürlich auch der Windschott eine von einer Ebene abweichende Form haben, die zu einer Verspannung in der Führungsnut sorgt.

Die gestellte Aufgabe wird im Übrigen auch gelöst durch ein erfindungsgemäßes Montagesystem, insbesondere ein Flachdach-Montagesystem für Solarmodule, mit mehreren der oben beschriebenen Montagefüße sowie einem Windschott, welches sich zwischen zwei Montagefüßen erstreckt und beidseits in den Aufnahmen der Montagefüße gelagert ist.

Vorzugsweise umfasst das Montagesystem wenigstens eine Querverbindungsstrebe zum Verbinden von zwei in einer Querrichtung benachbarten Montagefüßen, wobei die Querverbindungsstrebe ein Lager für den unteren Rand des Windschotts bildet. Die Querverbindungsstrebe übernimmt somit in vorteilhafter Weise zwei Funktionen, nämlich zum einen die Verbindung benachbarter Montagefüße in Querrichtung zur Bildung einer großen, modularen Systemeinheit beiträgt, sowie zum anderen die Lagerung des Windschotts.

Besonders bevorzugt greift dabei der untere Rand des Windschotts in eine Längsnut der Querverbindungsstrebe ein. Somit kann auch der untere Rand des Windschotts durch einfaches Einschieben in die Längsnut auf das Windschott wirkende Abhebekräfte aufnehmen, ohne dass zusätzliche Befestigungsmittel wie Schrauben oder Niete notwendig sind.

Ein oberer Rand des Windschotts kann am freien Ende des Schenkels durch ein Befestigungsmittel, insbesondere eine Klemme, fixiert werden. Vorzugsweise dient diese Klemme gleichzeitig zur Fixierung der Solarmodule gegen Abheben, das heißt, sie wirkt in einer zur Modulplattenebene senkrechten Richtung.

Das Windschott ist in einer weiteren Ausführungsform des Montagesystems im Querschnitt mehrfach abgewinkelt, insbesondere treppenstufenförmig ausgebildet. Diese abgewinkelte Ausführung sorgt zum einen bei Windlast für eine größere Stabilität des Windschotts gegen Ausbeulen. Zum anderen ist bei einer geeigneten, schrägen Abwinklung auch eine Reflexion des Sonnenlichts durch das Windschott auf die gegenüberliegende Solarmodulreihe möglich, was auf einfache und vorteilhafte Weise zu einer erhöhten Energieausbeute führt. Um diese über Reflexion erzielte, zusätzliche Energieausbeute zu maximieren, ist die abgewinkelte Oberfläche insbesondere hell und/oder glänzend ausgebildet.

In einer weiteren Ausführungsform des Montagesystems ist das Windschott ein Ballastelement und weist ein Ballastmaterial, vorzugsweise Beton, auf. Windschott und Ballastelement werden somit in einem vorteilhaften Kombi-Element zusammengefasst, wodurch sich die Anzahl der Systembauteile reduziert und folglich die Installation des Montagesystems vereinfacht.

Zweckmäßige Ausgestaltungen der Erfindung und deren Vorteile ergeben sich aus den Unteransprüchen.

Die Erfindung wird nachfolgend anhand einer bevorzugten Ausführungsform beschrieben, die in den beigefügten Zeichnungen dargestellt ist. In diesen zeigt:
- Figur 1 eine perspektivische Ansicht eines erfindungsgemäßen Montagefußes für Solarmodule;
- Figur 2 eine perspektivische Ansicht einer Solaranlage mit einem erfindungsgemäßen Montagesystem, das mehrere erfindungsgemäße Montagefüße aufweist;
- Figur 3 einen Ausschnitt aus einem erfindungsgemäßen Montagesystem für Solarmodule in perspektivischer Ansicht;
- Figur 4 eine Detailansicht des erfindungsgemäßen Montagesystems im Verbindungsbereich zwischen Grundkörper und Längsverbindungsstrebe;
- Figur 5 die Detailansicht gemäß Figur 4 ohne Längsverbindungsstrebe;
- Figur 6 eine Detailansicht des erfindungsgemäßen Montagesystems im Bereich eines hinteren Montagesystemendes;
- Figur 7 einen Ausschnitt aus einer Solaranlage mit erfindungsgemäßem Montagesystem in perspektivischer Ansicht; und
- Figur 8 ein Schnittdetail der Solaranlage gemäß Figur 7 im Bereich eines oberen Auflagers eines erfindungsgemäßen Montagefußes.

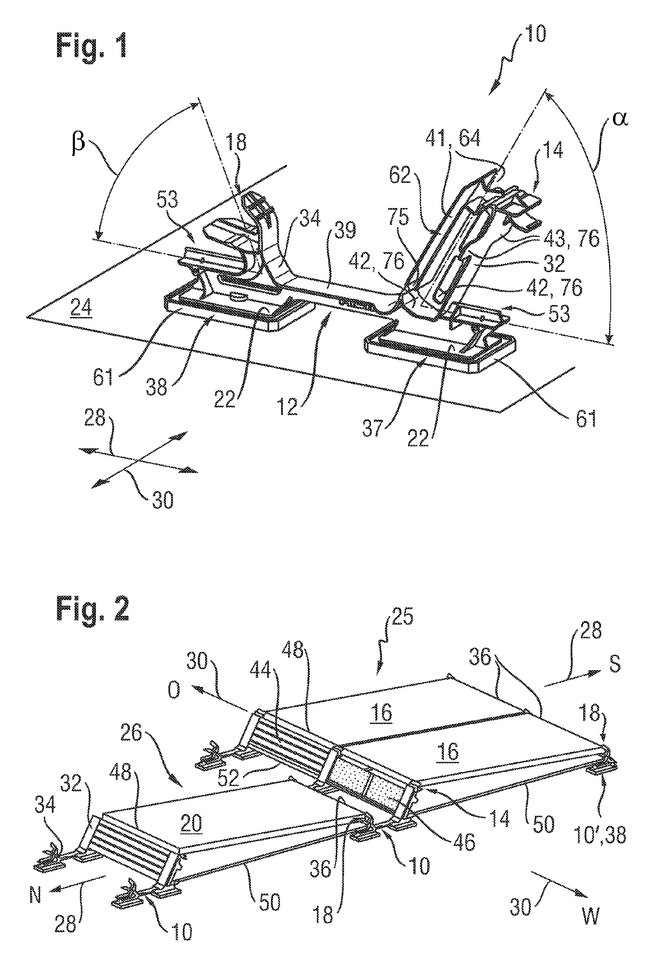

Die Figuren 1 und 2 zeigen einen Montagefuß 10 für Solarmodule, mit einem Grundkörper 12, einem mit dem Grundkörper 12 einstückig verbundenen oberen Auflager 14 für eine erste schräggestellte Modulplatte 16 und einem mit dem Grundkörper 12 einstückig verbundenen unteren Auflager 18 für eine zur ersten Modulplatte 16 nicht-koplanare, benachbarte, zweite schräggestellte Modulplatte 20. Der Grundkörper 12 hat wenigstens eine Standfläche 22, mit welcher sich der Montagefuß 10 an einem Untergrund 24, wie z.B. einer Dachhaut eines Flachdachs, abstützen kann. Das obere Auflager 14 weist dabei einen größeren Abstand zu einer von der Standfläche 22 aufgespannten Ebene auf als das untere Auflager 18.

Um die Funktion und Verwendung eines solchen Montagefußes 10 sowie den Unterschied zwischen ersten und zweiten Modulplatten 16, 20 zu verdeutlichen, ist in Figur 2 ein Ausschnitt einer Solaranlage 25 mit einem Montagesystem 26 für Solarmodule dargestellt, wobei das vorliegende Montagesystem 26 ein Flachdach-Montagesystem mit entsprechend horizontalem Untergrund 24 ist und mehrere Montagefüße 10 gemäß Figur 1 aufweist. Das Montagesystem 26 bildet zusammen mit den als Modulplatten 16, 20 ausgebildeten Solarmodulen die Solaranlage 25. Außer auf Flachdächern ist eine Verwendung des Montagesystems 26 auch auf Pultdächern mit geringer Dachneigung oder einem anderen Untergrund 24 mit geringer Neigung denkbar.

In seiner hauptsächlichen Funktion als Solarmodul-Träger stellt der Montagefuß 10 höhenversetzte Auflager 14, 18 für bis zu vier Modulplatten 16, 20 zur Verfügung. Des Weiteren übernimmt der Montagefuß 10 auch eine Verbindungsfunktion zwischen zwei Solarmodulreihen, sodass das Montagesystem 26, welches mehrere solcher Montagefüße 10 aufweist, mit minimalem Aufwand zu einer modularen Einheit verbunden werden kann und folglich keine unerwünschte Verschiebung einzelner Solarmodule oder einzelner Solarmodulreihen möglich ist.

Als Solarmodulreihe werden dabei mehrere benachbarte Modulplatten 16, 20 bezeichnet, die weitgehend koplanar ausgerichtet sind, das heißt im Wesentlichen in einer Ebene liegen. Im Gegensatz dazu sind die Modulplatten 16, 20 unterschiedlicher Solarmodulreihen nicht-koplanar angeordnet und liegen in unterschiedlichen, wenn auch zumeist parallelen Ebenen. Die Montagefüße 10 können universell eingesetzt werden und sind nicht auf bestimmte Modulplattenmaße eingeschränkt.

Das Montagesystem 26 umfasst mehrere relativ zu einer von der Standfläche 22 aufgespannten Ebene geneigte oder schräggestellte Solarmodule, welche gemäß Figur 2 in zwei Solarmodulreihen mit ersten Modulplatten 16 und zweiten Modulplatten 20 aufgeteilt sind, wobei in Figur 2 ist exemplarisch nur eine zweite Modulplatte 20 gezeigt ist.

Die Schrägstellung bzw. Neigung der Solarmodule ist in der Regel so ausgerichtet, dass eine Oberseite der Solarmodule nach Süden gewandt ist. Im Folgenden wird eine Neigungsrichtung der Solarmodule als Längsrichtung 28 des Montagesystems 26 definiert, sodass die Längsrichtung 28 bei einer fertiggestellten Solaranlage 25 gemäß Figur 2 üblicherweise der Nord-Süd-Richtung entspricht. Dementsprechend erstreckt sich eine Solarmodulreihe in einer Querrichtung 30, welche üblicherweise der West-Ost-Richtung entspricht.

Mit Bezug auf den Montagefuß 10 gemäß Figur 1 ist sowohl das obere Auflager 14 als auch das untere Auflager 18 am freien Ende eines vom Grundkörper 12 schräg nach oben ragenden Schenkels 32, 34 angeordnet.

Im vorliegenden Ausführungsbeispiel ist das freie Ende des Schenkels 34 mit dem unteren Auflager 18 als Gabellager zur Aufnahme eines (von Süden gesehen) vorderen Rands 36 der Modulplatte 16, 20 ausgebildet (vgl. auch Figur 2). Das Gabellager ist dabei so ausgeführt, dass es ein begrenztes Verschwenken der Modulplatte 16, 20 um das untere Auflager 18 zulässt, sodass der Montagefuß 10 in baugleicher Ausführung für unterschiedliche Neigungswinkel der Solarmodule verwendet werden kann.

Gemäß Figur 1 schließen beide Schenkel 32, 34 für die Auflager 14, 18 jeweils einen spitzen Winkel α, β mit der Standfläche 22 ein, wobei die Schenkel 32, 34 in Längsrichtung 28 jeweils voneinander weg gerichtet sind.

Insbesondere der Schenkel 32 des oberen Auflagers 14 ist vom unteren Auflager 18 weg gerichtet und schließt einen spitzen (Anstell-)Winkel α, das heißt einen Winkel von 0° < α < 90° mit der Standfläche 22 ein. Aufgrund des bei einer Windbelastung auftretenden Staudrucks liegt der Anstellwinkel α des Schenkels 32 vorzugsweise zwischen 50° und 80°. Anstellwinkel α 90° sind prinzipiell denkbar, aus dem oben genannten Grund allerdings nur in besonderen Ausnahmefällen sinnvoll.

Der Schenkel 34 des unteren Auflagers 18 ist in der Regel so kurz, dass sein Anstellwinkel β keinen nennenswerten Einfluss auf das Montagesystem 26 hat. Daher kann der in Figur 1 eingezeichnete Anstellwinkel β des Schenkels 34 auch Werte von β ≥ 90° annehmen.

Der Grundkörper 12 des Montagefußes 10 gemäß Figur 1 umfasst einen ersten Grundkörperabschnitt 37 mit dem Schenkel 32, einen zweiten Grundkörperabschnitt 38 mit dem Schenkel 34 und einen Verbindungssteg 39 zwischen den Grundkörperabschnitten 37, 38, wobei die Standfläche 22 im Bereich des Verbindungsstegs 39 unterbrochen ist. Mit anderen Worten gibt es zwei Standflächen 22, welche in vorteilhafter Weise unmittelbar an den Lasteinleitungsstellen der Schenkel 32, 34 des Montagefußes 10 angeordnet sind, sodass eine sichere Lastabtragung in den Untergrund 24 gewährleistet ist. Gegenüber einer einzigen, großen Standfläche 22 bietet diese Ausführungsform bei lokal sehr unebenem Untergrund 24 den Vorteil einer größeren Standsicherheit infolge geringerer Kippneigung.

Außerdem ermöglicht die unterbrochene Standfläche 22 eine Verlegung von Leitungen und Kabeln in Querrichtung 30 unmittelbar auf dem Untergrund 24, unterhalb des Verbindungsstegs 39. Durch wird die Gefahr einer Beschädigung der Leitungen oder Kabel minimiert.

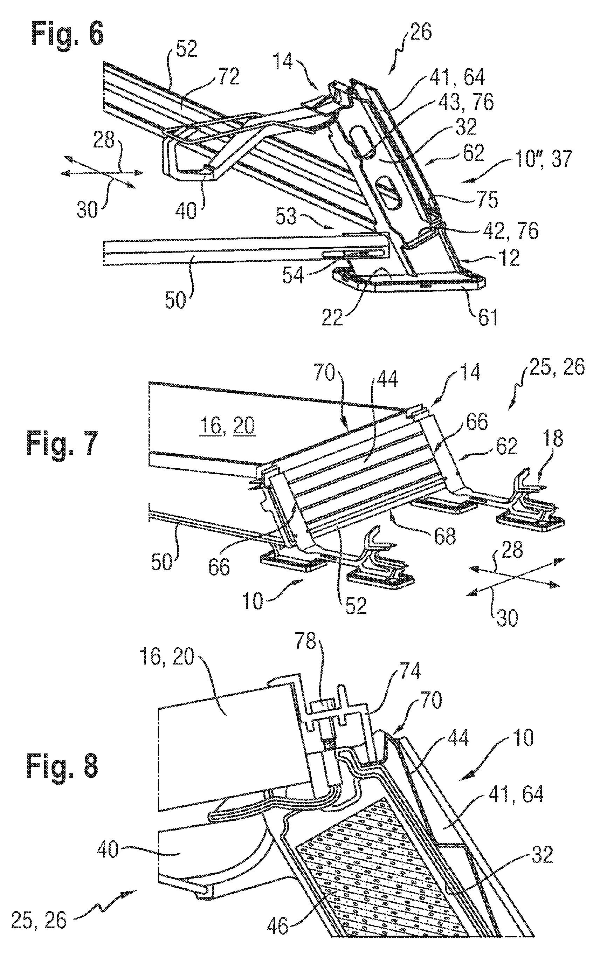

In einer alternativen Ausführungsvariante erfolgt die Verlegung der Leitungen und Kabel in Querrichtung 30 in einem (nicht dargestellten) Kabelkanal, der mittels einer Kabelkanalhalterung 40 am freien Ende des Schenkels 32 befestigt ist (vgl. Figuren 6 und 7). Die Leitungen und Kabel liegen in diesem Fall nach einer Fertigstellung der Solaranlage 25 geschützt unter den Solarmodulen.

Gemäß Figur 1 sind am Schenkel 32 des oberen Auflagers 14 Lagerabschnitte 41, 42, 43 für ein Windschott 44 und ein Ballastelement 46 (siehe auch Figur 2) zu sehen. Der Lagerabschnitt 41 für das Windschott 44 ist dabei eine Führungsnut 64, welche sich in Längsrichtung des Schenkels 32 erstreckt und seitliche Enden des Windschotts 44 aufnehmen kann. Ein Anstellwinkel des Windschotts 44 entspricht somit dem Anstellwinkel α des Schenkels 32 mit dem oberen Auflager 14. Die Lagerabschnitte 42, 43 für das Ballastelement 46 sind als Abstützfläche im Übergangsbereich zwischen dem Grundkörper 12 und dem Schenkel 32 bzw. als seitlich vorstehende Lagerzunge am Schenkel 32 ausgebildet. Die Lagerabschnitte 42, 43 sind dabei so angeordnet, dass ein Anstellwinkel der plattenförmigen Ballastelemente 46 im wesentlichen dem Anstellwinkel α des Schenkels 32 mit dem oberen Auflager 14 entspricht.

Aus den Figuren 1 und 2 geht außerdem hervor, dass in Querrichtung 30 gesehen am Montagefuß 10 nicht nur zwei Modulplatten 16, 20, sondern auch zwei Windschotte 44 und zwei Ballastelemente 46 aneinandergrenzen. Folglich weist der Schenkel 32 des oberen Auflagers 14 auf seinen in Querrichtung 30 entgegengesetzten Seiten jeweils Lagerabschnitte 41, 42, 43 für angrenzende Windschotte 44 und Ballastelemente 46 auf.

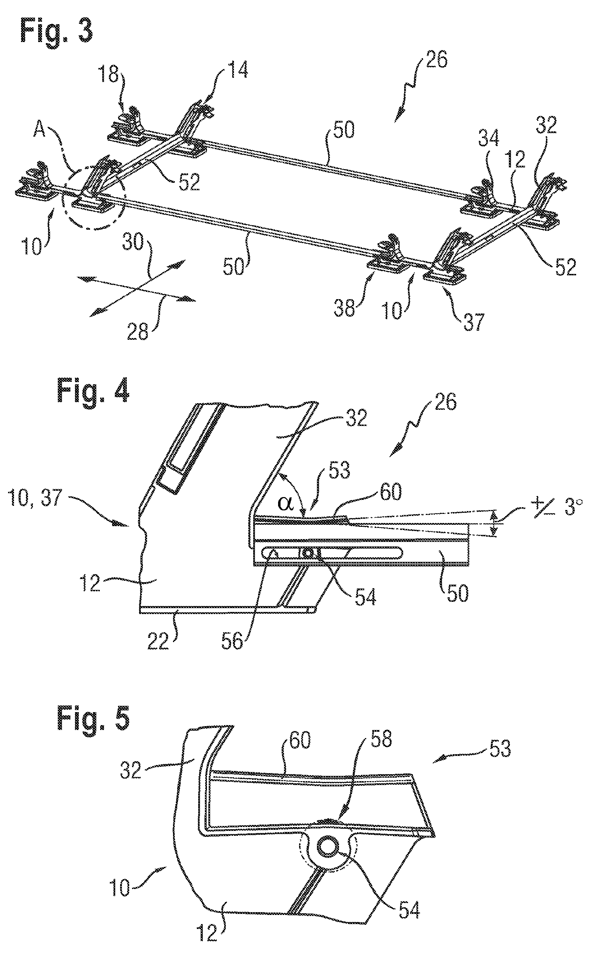

Das Montagesystem 26 weist in Figur 2, wie bereits erläutert, mehrere in Längsrichtung 28 hintereinander angeordneten Montagefüßen 10 auf, um den vorderen Rand 36 einer Modulplatte 16, 20 am unteren Auflager 18 eines vorderen Montagefußes 10 und einen hinteren Rand 48 dieser Modulplatte 16, 20 am oberen Auflager 14 eines hinteren Montagefußes 10 zu lagern. Darüber hinaus umfasst das Montagesystem 26 Längsverbindungsstreben 50 zum Verbinden von zwei in Längsrichtung 28 benachbarten Montagefüßen 10 sowie Querverbindungsstreben 52 zum Verbinden von zwei in Querrichtung 30 benachbarten Montagefüßen 10. Dieser prinzipielle Systemaufbau lässt sich insbesondere auch der Figur 3 entnehmen, in der ein Ausschnitt des Montagesystems 26 dargestellt ist. Die Längsverbindungsstreben 50 sind vorzugsweise aus Stahl hergestellt, können alternativ aber auch Kunststoff- oder Alustreben sein. Hingegen sind die Querverbindungsstreben 52 bevorzugt Metallstreben, insbesondere dann, wenn sie als Auflager für die Ballastelemente 46 dienen. Alternativ sind aber natürlich auch Querverbindungsstreben 52 aus Kunststoff denkbar.

Bei dem in Figur 3 dargestellten Beispiel deckt das Windschott 44 den gesamten Bereich zwischen zwei Montagefüßen 10 ab, so dass der Bereich unter den Modulplatten 16, 20 fast vollkommen abgekapselt ist. Alternativ hierzu ist es auch möglich, dass das Windschott 44 auch nur einen Teil von etwa 50-90% des Bereiches abdeckt und somit einen Luftaustausch zwischen Oberseite und Unterseite ermöglicht. Hierdurch kann die Windlast des Montagesystems 26 verringert werden.

Die Querverbindungsstreben 52 sind vorzugsweise rinnenförmig ausgebildet und erstrecken sich jeweils zwischen zwei benachbarten Montagefüßen 10, wobei die Enden jeder Querverbindungsstrebe 52 an den Montagefüßen 10 befestigt sind. Gemäß Figur 3 sind die Enden der Querverbindungsstrebe 52 in Ausnehmungen der Schenkel 32 eingesteckt und liegen am ebenfalls rinnenförmig ausgebildeten Lagerabschnitt 42 im Übergangsbereich zwischen Grundkörper 12 und Schenkel 32 auf (siehe auch Figur 6).

Die einzelnen Montagefüße 10 gemäß Figur 1 weisen jeweils höhenversetzte Auflager 14, 18 für bis zu vier Modulplatten 16, 20 auf, wobei in den Eck- und Randbereichen des Montagesystems 26 lediglich ein oder zwei Auflager 14, 18 genutzt werden. Insbesondere an dem von Süden gesehen vorderen Ende des Montagesystems 26 werden entsprechend angepasste Montagefüße 10' verwendet, welche im wesentlichen nur aus dem zweiten Grundkörperabschnitt 38 mit den unteren Auflagern 18 bestehen (vgl. Figur 2). Um auch diese angepassten Montagefüße 10' in Querrichtung 30 fixieren zu können, ist hier der Lagerabschnitt 42 zur Aufnahme einer Querverbindungsstrebe 52 ausnahmsweise im Übergangsbereich zwischen dem Grundkörper 12 und dem Schenkel 34 des unteren Auflagers 18 ausgebildet. Auch am hinteren Ende des Montagesystems 26 können angepasste Montagefüße 10" verwendet werden, welche im wesentlichen nur aus dem ersten Grundkörperabschnitt 37 mit den oberen Auflagern 14 bestehen (vgl. Figur 6).

Die Figur 4 zeigt eine Detailansicht A des Montagesystems 26 in einem Verbindungsbereich zwischen Montagefuß 10 und Längsverbindungsstrebe 50, wobei dieser Verbindungsbereich zur Orientierung in Figur 3 gestrichelt eingekreist ist. In Verbindung mit Figur 1 wird klar, dass der Grundkörper 12 des Montagefußes 10 an seinen in Längsrichtung 28 gegenüberliegenden Enden jeweils einen Befestigungsabschnitt 53 für eine Längsverbindungsstrebe 50 aufweist.

Um unterschiedliche Abstände von hintereinanderliegenden Montagefüßen 10 einstellen zu können, ist zwischen der Längsverbindungsstrebe 50 und dem Grundkörper 12 ein Befestigungsmittel 54 vorgesehen ist, das eine Arretierung von Montagefuß 10 und Längsverbindungsstrebe 50 in Längsrichtung 28 an unterschiedlichen Positionen erlaubt. Das Befestigungsmittel 54 umfasst im vorliegenden Fall eine Schraube, die mit einem Langloch 56 in der Längsverbindungsstrebe 50 zusammenwirkt, um eine in Längsrichtung 28 variable Arretierung zu ermöglichen.

Die Figur 5 zeigt die Detailansicht gemäß Figur 4, allerdings ohne die Längsverbindungsstrebe 50. Dadurch ist der Befestigungsabschnitt 53 des Grundkörpers 12 im Detail zu sehen und gut zu erkennen, dass das Befestigungsmittel 54 Rastgeometrien 58 am Montagefuß 10 aufweist. Diese Rastgeometrien 58 wirken bevorzugt mit geeigneten (nicht gezeigten) Rastgeometrien an der Längsverbindungsstrebe 50 zusammen, sodass über die längsverschiebliche Verbindung zwischen Montagefuß 10 und Längsverbindungsstrebe 50 zahlreiche unterschiedliche Rasteingriffe entstehen. Diese Rasteingriffe sorgen bereits ohne Verschraubung für eine Arretierung in Längsrichtung 28, sodass sich das Montagesystem 26 mit geringem Aufwand ausrichten lässt. Durch ein zusätzliches Einstecken und Anziehen der Schraube wird die bereits vorhandene Arretierung mittels der zusammenwirkenden Rastgeometrien 58 danach lediglich gesichert. Im Übrigen ist durch die Rastgeometrien 58 auch dann noch eine gewisse Arretierung in Längsrichtung 28 gewährleistet, wenn sich einzelne Schrauben des Befestigungsmittels 54 im Laufe der Zeit lockern.

Ferner ist zwischen dem Montagefuß 10 und der Längsverbindungsstrebe 50 ein Anschlag 60 vorgesehen, wobei der Anschlag 60 einen Winkelverstellbereich um eine Mittellage begrenzt, in welcher die Längsverbindungsstrebe 50 parallel zur Standfläche 22 verläuft. Dieser Anschlag 60 ist im vorliegenden Ausführungsbeispiel am Montagefuß 10 ausgebildet (vgl. Figur 5) und weist einen Winkelverstellbereich in der Größenordnung von etwa ±3° um die Mittellage auf (vgl. auch Figur 4). Durch diesen Winkelverstellbereich können Unebenheiten sowie zum Beispiel aus Drainagegründen vorhandene Gefällewechsel des Untergrunds 24 ausgeglichen werden.

Da das Montagesystem 26 starken Temperaturschwankungen unterliegt und sowohl in Längsrichtung 28 als auch in Querrichtung 30 gewöhnlich Abmessungen von mehreren Metern erreicht, sind die auftretenden Dehnungen durch Temperaturänderung beachtlich. Damit diese Temperaturdehnungen nicht zu unerwünscht großen Spannungen innerhalb des Montagesystems 26 führen, können z.B. in Längsrichtung 28 und/oder in Querrichtung 30 eher mittig angeordnete Montagefüße 10 in einer von ihren Standflächen 22 aufgespannten Ebene als Festlager und die übrigen Montagefüße 10 in dieser Ebene als Gleitlager ausgebildet sein. Hierzu sind bevorzugt Gleitschuhe 61, wie in den Figuren 1 und 6 angedeutet, vorgesehen, sodass sich die Montagefüße 10 über ihre Standfläche 22, optionale Gleiteinlagen und die Gleitschuhe 61 am Untergrund 24 abstützen.

Der Montagefuß 10 ist vorzugsweise einstückig aus Aluminium, insbesondere als Druckguß, hergestellt. Er lässt sich alternativ aber auch aus Kunststoff, insbesondere faserverstärktem Kunststoff, oder Stahl herstellen. Aus Kunststoffen lassen sich auch relativ komplexe geometrische Formen wie der Montagefuß 10 mit relativ geringem Aufwand herstellen. Ferner sind für den Montagefuß 10 geeignete Kunststoffe mit ausreichender Festigkeit, Dauerhaftigkeit und Witterungsbeständigkeit vergleichsweise preiswert erhältlich, sodass sich der Montagefuß 10 insgesamt sehr kostengünstig fertigen lässt. Alternativ ist selbstverständlich auch eine mehrteilige Herstellung des Montagefußes 10 denkbar.

Die Figur 6 zeigt den Montagefuß 10", der kein unteres Auflager 18 aufweist und somit am hinteren, das heißt in der Regel nördlichen Ende des Montagesystems 26 zum Einsatz kommt.

Der Montagefuß 10" umfasst den Grundkörper 12, der eine Standfläche 22 hat, mit welcher sich der Montagefuß10" am Untergrund 24 abstützen kann, den vom Grundkörper 12 nach oben ragenden Schenkel 32 und das obere Auflager 14 für eine erste schräggestellte Modulplatte 16, welches am freien Ende des Schenkels 32 angeordnet ist, wobei der Schenkel 32 eine Aufnahme 62 für das Windschott 44 aufweist.

Die Aufnahme 62 bildet eine Führung für das Windschott 44 und ist gemäß Figur 6 konkret eine am Schenkel 32 angeformte Führungsnut 64 zur Aufnahme eines seitlichen Rands 66 des Wndschotts 44.

Die Figur 7 zeigt einen Ausschnitt der Solaranlage 25 mit installiertem Windschott 44 und montiertem Solarmodul. Das Montagesystem 26 umfasst dabei mehrere Montagefüße 10 sowie das Windschott 44, welches sich zwischen zwei Montagefüßen 10 erstreckt und beidseits mit seinen seitlichen Rändern 66 in den Aufnahmen 62 der Montagefüße 10 gelagert ist. Das Windschott 44 erstreckt sich folglich im montierten Zustand von einem unteren Rand 68 im Übergangsbereich zwischen dem Schenkel 32 und dem Grundkörper 12 bis zu einem oberen Rand 70 im Bereich des freien Schenkelendes und greift mit seinen seitlichen Rändern 66 in die Führungsnuten 64 der angrenzenden Schenkel 32 ein.

Die Führungsnut 64 kann in Nutlängsrichtung leicht gekrümmt sein, sodass beim Einschieben des in Nutlängsrichtung vorzugsweise geraden, flexiblen und elastischen Wndschotts 44 eine Vorspannung zwischen Wndschott 44 und Führungsnut 64 entsteht. Durch diese Vorspannung werden störende Klappergeräusche zwischen Windschott 44 und Führungsnut 64 verhindert. Derselbe Effekt kann alternativ auch mit einer in Nutlängsrichtung geraden Führungsnut 64 und einem in Nutlängsrichtung gekrümmten Windschott 44 erzielt werden.

Die Aufnahme 62 weist gemäß den Figuren 1 und 6 am unteren Ende der Führungsnut 64 einen Windschott-Anschlag 75 im Übergangsbereich zwischen dem Schenkel 32 und dem Grundkörper 12 auf. Eine gewünschte Bodenfreiheit des Montagesystems 26, beispielsweise zur problemlosen Verlegung eines Kabelkanals in Längsrichtung 28, lässt sich durch diesen Anschlag 75 einfach einstellen und bereits bei der Fertigung des Montagefußes 10 berücksichtigen.

In den Figuren 6 und 7 ist außerdem die Querverbindungsstrebe 52 zum Verbinden von zwei in Querrichtung 30 benachbarten Montagefüßen 10 zu erkennen, wobei die Querverbindungsstrebe 52 ein Linienlager für den unteren Rand 68 des Windschotts 44 bildet.

Die Querverbindungsstrebe 52 weist eine Längsnut 72 auf (Figur 6), wobei der untere Rand 68 des installierten Windschotts 44 (Figur 7) in diese Längsnut 72 der Querverbindungsstrebe 52 eingreift, sodass das Windschott 44 an seinem unteren Rand 68 in einer Richtung quer zu seiner Erstreckungsebene gehalten ist. Als Erstreckungsebene des Windschotts 44 wird dabei eine Ebene bezeichnet, die von der Querverbindungsstrebe 52 und der Führungsnut 64 im Schenkel 32 aufgespannt wird. Dies gilt auch für den Fall, dass das Windschott 44 im Querschnitt mehrfach abgewinkelt ist.

Die Figur 8 zeigt ein Schnittdetail der Solaranlage 25 im Bereich des oberen Auflagers 14. Das Windschott 44 ist hierbei im Querschnitt mehrfach abgewinkelt, insbesondere treppenstufenförmig ausgebildet. Vorzugsweise ist das Windschott 44 schräg abgewinkelt, sodass das Sonnenlicht bei einem vorgegebenen Sonnenstand durch das Windschott 44 auf die Oberfläche des gegenüberliegenden Solarmoduls reflektiert wird. Dies führt zu einer erhöhten Energieausbeute des Solarmoduls, wobei sich dieser Effekt insbesondere bei gut reflektierenden Windschott-Oberflächen, das heißt zum Beispiel hellen oder glänzenden Oberflächen, positiv bemerkbar macht.

In einer besonders kostengünstigen Variante ist das Windschott 44 zumindest teilweise aus Kunststoff hergestellt. Kunststoffe weisen in der Regel eine ausreichende Flexibilität und Elastizität auf, um in der Führungsnut 64 eine gewisse Vorspannung auszubilden, die unerwünschte Klappergeräusche des Windschotts 44 in der Führungsnut 64 verhindert. Auch die auftretenden Belastungen können von einem Kunststoff-Windschott 44 problemlos aufgenommen werden, da die seitlichen Ränder 66 zuverlässig in Führungsnuten 64 der Montagefüße 10 und der untere Rand 68 zuverlässig in der Längsnut 72 der Querverbindungsstrebe 52 gehalten ist. Außerdem sind gemäß Figur 8 noch Klemmen 74 vorgesehen, welche durchgehend oder punktuell auch den oberen Rand 70 des Windschotts 44 fixieren.

Gemäß Figur 6 bildet der Schenkel 32 zusätzlich ein Lager 76 für das plattenförmige Ballastelement 46, welches in Figur 8 eingebaut dargestellt ist. Bei diesem Systemaufbau ist klar, dass das Ausbeulen des Windschotts 44 bei Windlast auch im Fall eines sehr dünn ausgebildeten Schotts kein Problem darstellt, da sich das Windschott 44 nach geringer Durchbiegung am Ballastelement 46, beispielsweise einer steifen Betonplatte, abstützen kann. Generell ist das Windschott 44 plattenförmig ausgebildet, wobei es im Detail allerdings einen ebenen, leicht gekrümmten oder gestuften Querschnitt aufweisen kann.

In einer alternativen Ausführungsvariante kann das Windschott 44 selbst als Ballastelement 46 ausgeführt sein und ein Ballastmaterial wie zum Beispiel Beton aufweisen. Konkret können einfache Betonplatten verwendet werden, welche sowohl die Funktion des Windschotts 44 als auch die Funktion des Ballastelements 46 übernehmen. Alternativ sind auch als Hohlkörperstruktur gefertigte Kunststoff-Windschotte vorstellbar, deren Hohlräume je nach Bedarf mit Ballastmaterial wie zum Beispiel Beton oder einer anderen geeigneten Vergussmasse befüllt werden.

Nach der Installation der Windschotte 44 und/oder Ballastelemente 46 sowie der Montage der Solarmodule werden am freien Ende des Schenkels 32 die Klemmen 74 aufgebracht, welche sowohl den oberen bzw. hinteren Rand 48 der Modulplatten 16, 20 als auch den oberen Rand 70 der Windschotte 44 fixieren. Diese Klemmen 74 werden gemäß Figur 8 am freien Ende des Schenkels 32 im Montagefuß 10 verankert, beispielsweise mittels einer Schraube 78.

## Patentansprüche

1. Montagefuß für Solarmodule, mit
einem Grundkörper (12), der wenigstens eine Standfläche (22) hat, mit welcher sich der Montagefuß (10) an einem Untergrund (24) abstützen kann,
einem vom Grundkörper (12) nach oben ragenden Schenkel (32) und
einem oberen Auflager (14) für eine erste schräggestellte Modulplatte (16), welches am Schenkel (32), vorzugsweise an dessen freiem Ende, angeordnet ist,
wobei der Schenkel (32) eine Aufnahme (62) für ein Windschott (44) bildet.

2. Montagefuß nach Anspruch 1, **dadurch gekennzeichnet, dass** ein mit dem Grundkörper (12) verbundenes, unteres Auflager (18) für eine zur ersten Modulplatte (16) nicht-koplanare, benachbarte, zweite schräggestellte Modulplatte (20) vorgesehen ist.

3. Montagefuß nach Anspruch 1 oder 2, **dadurch gekennzeichnet, dass** die Aufnahme (62) eine Führung für das Windschott (44) bildet.

4. Montagefuß nach einem der vorhergehenden Ansprüche, **dadurch gekennzeichnet, dass** die Aufnahme (62) eine am Schenkel (32) angeformte Führungsnut (64) zur Aufnahme eines seitlichen Rands (66) des Windschotts (44) ist.

5. Montagefuß nach Anspruch 4, **dadurch gekennzeichnet, dass** die Führungsnut (64) in Nutlängsrichtung gekrümmt ist.

6. Montagefuß nach Anspruch 4 oder 5, **dadurch gekennzeichnet, dass** sich die Führungsnut (64) im Wesentlichen in Schenkellängsrichtung erstreckt und mit der Standfläche (22) einen Winkel zwischen 50° und 80° einschließt.

7. Montagefuß nach einem der vorhergehenden Ansprüche, **dadurch gekennzeichnet, dass** die Aufnahme (62) einen Windschott-Anschlag (75) im Übergangsbereich zwischen Schenkel (32) und Grundkörper (12) aufweist.

8. Montagefuß nach einem der vorhergehenden Ansprüche, **dadurch gekennzeichnet, dass** der Schenkel (32) ein Lager (76) für ein Ballastelement (46), insbesondere eine aufgestellte Ballastplatte, bildet.

9. Montagesystem, insbesondere Flachdach-Montagesystem für Solarmodule, mit
mehreren Montagefüßen (10, 10") nach einem der vorhergehenden Ansprüche, sowie
einem Windschott (44), welches sich zwischen zwei Montagefüßen (10, 10") erstreckt und beidseits in den Aufnahmen (62) an den Montagefüßen (10, 10") gelagert ist.

10. Montagesystem nach Anspruch 9, **dadurch gekennzeichnet, dass** sich das Windschott (44) im montierten Zustand von einem unteren Rand (68) im Übergangsbereich zwischen Schenkel (32) und Grundkörper (12) bis zu einem oberen Rand (70) im Bereich des freien Schenkelendes erstreckt und wenigstens ein seitlicher Rand (66) des Windschotts (44) zumindest abschnittsweise in eine Führungsnut (64) des Schenkels (32) eingreift.

11. Montagesystem nach Anspruch 9 oder 10, **dadurch gekennzeichnet, dass** wenigstens eine Querverbindungsstrebe (52) zum Verbinden von zwei in einer Querrichtung (30) benachbarten Montagefüßen (10, 10") vorgesehen ist, wobei die Querverbindungsstrebe (52) ein Lager für den unteren Rand (68) des Windschotts (44) bildet.

12. Montagesystem nach Anspruch 11, **dadurch gekennzeichnet, dass** der untere Rand (68) des Windschotts (44) in eine Längsnut (72) der Querverbindungsstrebe (52) eingreift.

13. Montagesystem nach einem der Ansprüche 9 bis 12, **dadurch gekennzeichnet, dass** das Windschott (44) im Querschnitt mehrfach abgewinkelt ist, insbesondere treppenstufenförmig ausgebildet ist.

14. Montagesystem nach einem der Ansprüche 9 bis 13, **dadurch gekennzeichnet, dass** das Windschott (44) zumindest teilweise aus Kunststoff hergestellt ist.

15. Montagesystem nach einem der Ansprüche 9 bis 14, **dadurch gekennzeichnet, dass** das Windschott (44) ein Ballastelement (46) ist und ein Ballastmaterial, vorzugsweise Beton, aufweist.
